Europäisches Patentamt

European Patent Office

Office européen des brevets

(19)

(11) EP 1 067 730 A1

(12) **EUROPEAN PATENT APPLICATION**

(43) Date of publication:
**10.01.2001 Bulletin 2001/02**

(51) Int Cl.⁷: **H04L 1/20**, H04L 1/00

(21) Application number: **99440178.4**

(22) Date of filing: **02.07.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **ALCATEL**
**75008 Paris (FR)**

(72) Inventor: **Mortensen, Ivar, Dr.**
**70825 Komtal (DE)**

(74) Representative: **Brose, Gerhard, Dipl.-Ing. et al**
**Alcatel**
**Intellectual Property Department, Stuttgart**
**Postfach 30 09 29**
**70449 Stuttgart (DE)**

(54) **Determining the transmission quality of a radio channel**

(57) For determining the transmission quality of a radio channel (DPDCH) it is well known to estimate measures such as the so-called signal-to-interference ratio, the so-called frame error rate or the so-called bit error rate (BER).

According to the invention it is proposed to take, at the receiving end, from the signaling data (TPC; TFCI) that part (TFCI) of signaling data which are which are encoded and transmitted with the higher redundancy and to compare them (TFCI) with reference data (REF), and to compute on the basis of this comparison a measure (BER) of the transmission quality of the radio channel (DPDCH). Thus, a measure (BER) of the transmission quality is computed on the basis of a small but very reliable set of data. Therefor few processing time and power are needed to accomplish an accurate result. The invention will preferably be applied to radiocommunications systems in which CDMA radio signals are transmitted and which is compatible to the standard UMTS (universal mobile telecommunications system).

Fig. 2

**Description**

This invention relates to a method of determining the transmission quality of a radio channel as set forth in the preamble of claim 1. The invention also relates to a circuit for carrying out the method, to a radio receiver comprising such a circuit, to a radio device comprising such a radio receiver and to a radiocommunications system comprising such radio devices as set forth in the preambles of the respective independent claims.

For determining the transmission quality of a radio channel it is well known to estimate measures such as the so-called signal-to-interference ratio (SIR), the so-called frame error rate (FER) or the so-called bit error rate (BER), the latter indicating how many of the total number of transmitted bits are wrongly detected. These measures represent quality of service criteria that are commonly used to control the radio transmission power for providing a sufficient level of quality. In the case of packet data transmission, e.g. a maximum bit error rate of $10^{-6}$ may be acceptable for providing a high quality of service.

A known prior art teaching of a method of determining the quality of a radio channel is disclosed in U.S. Pat. No. 5,406,562 (Roney). There is disclosed a BER estimation process of user information and of control signals which are transmitted within a digital radio telecommunications system. The user information is transmitted over a radio channel and the control signals are transmitted over a signaling channel which is associated with that radio channel. The signaling channel is referred to in the art as a Fast Associated Control Channel (FACCH). For determining the quality of the radio channel both the user information and the control signals represent input data of the BER estimation process. The estimated BER of the control signals is subtracted from the estimated BER of the user information. The difference is then compared with a threshold in order to decide whether the received data is encoded user information or a control signal (FACCH message). This known BER estimation process is quite complex, because both sorts of received data, i.e. the useful data (user information) and the signaling data (control signals), have to be evaluated within the BER estimation process. Therefor processing times and power for performing this known method are high. This U.S. Patent, however, does not teach or suggest a method of determining the quality of a radio channel in a quick and robust manner.

Another well-known method of determining the BER of a radio channel on which data are sent according to a given interleaving scheme is the following: At the receiving end, the decoded bits which come from the output of the decoder, e.g. from a Viterbi decoder, are re-encoded and compared with the received raw bits before decoding. This implies, however, that a full interleaver block has to be stored in a buffer memory and that the full datastream has to be re-encoded. Alternatively another measure of quality, the so-called "quality metric", can be deduced from the operation of the Viterbi decoder. This is not without a certain extra complexity in the decoder.

It is an object of the invention to present an improved method of determining the transmission quality of a radio channel with an associated signaling channel, especially to present a method which needs less processing time and power. Beside this it is desirable to have a circuit for carrying out the method, a radio receiver comprising such a circuit, a radio device comprising such a radio receiver and a radiocommunications system comprising such radio devices.

The object is attained by a method with the features according to claim 1 and by a circuit, a radio receiver, a radio device, and a radiocommunications system with the features according to the respective independent claims.

Accordingly, it is proposed to divide, at the transmitting end, the signaling data into at least two parts, with a first part being encoded with a higher redundancy than a second part, and then to compare, at the receiving end, the signaling data from the first part which is encoded and transmitted with the higher redundancy with reference data, and then based on this comparison to compute a measure of the transmission quality of the radio channel.

Thus, a measure of the transmission quality is computed on the basis of a small but very reliable set of data. Therefor less processing time and power are needed to accomplish an accurate result. The invention is predicated on recognition that evaluating of quite a few signaling data is sufficient to calculate a reliable measure of the transmission quality, such as the bit error rate, if these signaling data are encoded with high redundancy.

Further advantageous features of the invention are defined in the subclaims.

Accordingly, a code formed from a number of n orthogonal block codes is used to encode said signaling data with the higher redundancy, and said n orthogonal block codes are used as the reference data. Thus, the reference data represent a limited number of reference code words which can easily be stored in a memory in the shape of a look-up table. And the comparison of the transmitted signaling data with these reference data is performed data word by data word. Thus the process of data comparison is very fast.

Furthermore, the signaling data are transmitted in frames divided into time slots, and at least the encoding using the n orthogonal block codes is performed frame by frame, with Walsh-Hadamard codes being used for the block codes. The use of this special sort of codes provides very high redundancy while processing power for encoding the data is very low.

A further advantage arises if the signaling data encoded with the higher redundancy are transmitted and received as n-bit sequences, and if the reference data comprise n-bit reference sequences, with which the respective received bit sequence is compared. In this connection it is particularly advantageous if the received bit sequence is compared with the n-bit reference sequences by correlating the bit sequences to obtain correlation products, if the greatest of which is used to compute a bit error rate which is the measure of the transmission quality of the radio channel, and which is given as

$$BER = 1 - (|Rk| + y)/2y,$$

with $y = n \cdot ld(n)$ [ld: logarithm to the base two].

Thus the calculation of the bit error rate is a result from a data correlation process which has to be performed in the decoder anyway so that no extra complexity in hardware design occurs.

A further advantage arises if the radio channel is a CDMA radio channel, and if the signaling data encoded with the higher redundancy define parameters for the decoding of the useful data transmitted over the radio channel, particularly the interleaving pattern and the spreading factor to be used for the transmission on the CDMA radio channel. Thus the very reliable transmission of this special sort of signaling data is exploited not only for getting the parameters of the decoding scheme but also for estimating the quality of the radio channel.

The invention will now be described in more detail with reference to the accompanying drawings, in which:

Fig. 1    is a flowchart of a method of determining the transmission quality of a radio channel in accordance with the invention;

Fig. 2    shows a schematic diagram of the transmission scheme according to which useful and signaling data are transmitted;

Fig. 3    shows schematically the structure of a radio communications system with radio devices comprising receivers according to the invention; and

Fig. 4    shows schematically the structure of such a radio device.

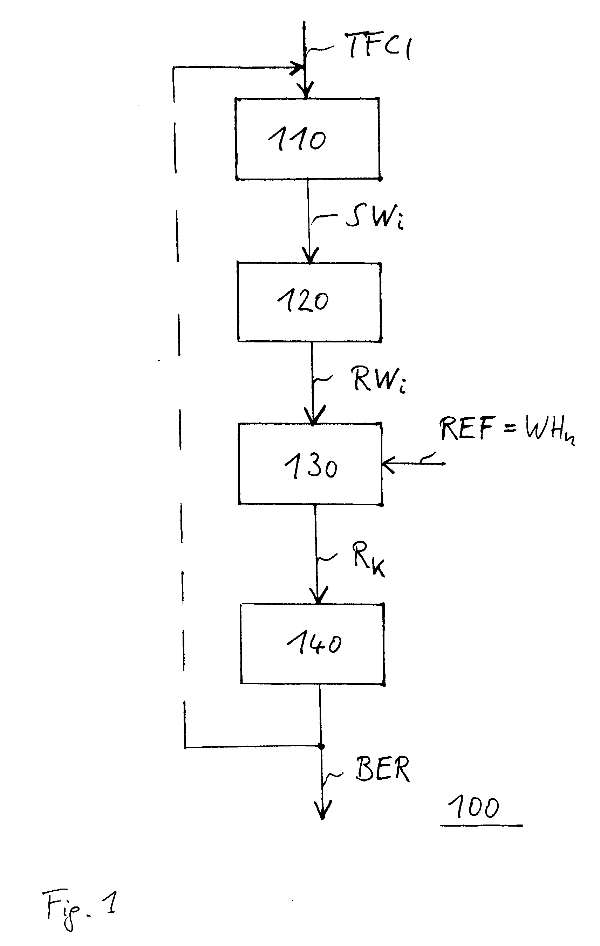

Fig. 1 shows a flowchart of a method 100 comprising the steps 110 to 140 in which the transmission quality of a radio channel is determined in accordance with the invention. The input data for the first step 110 are signaling data TFCI which define parameters for the decoding of the useful data which are transmitted on the radio channel.

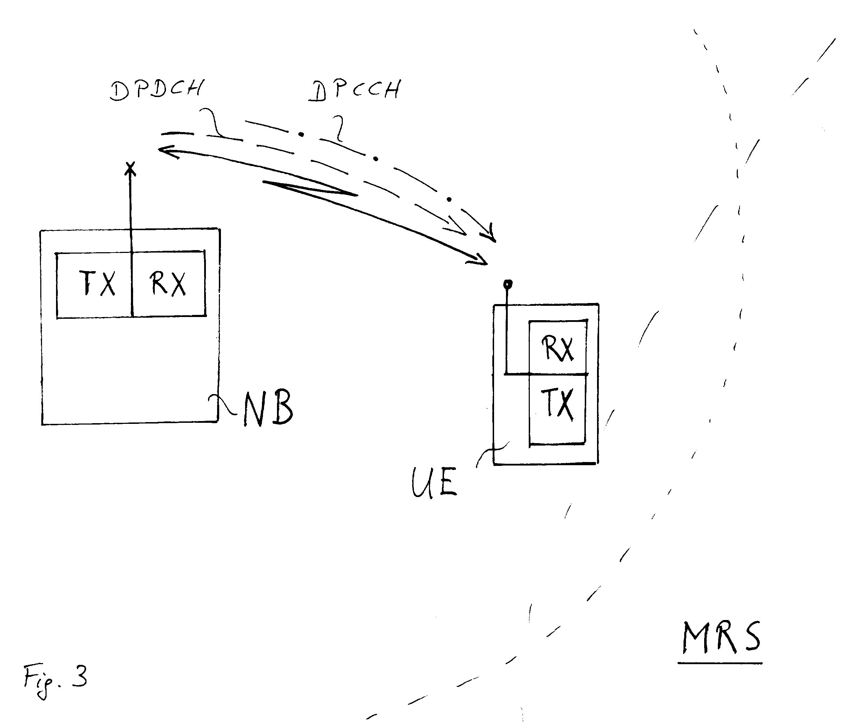

The format of these data and the scheme according to which they are transmitted are known per se from the technical report "UTRA FDD; Physical layer procedures", page 17, figure 3. This report carrying the inscription "3GPP RAN S1.14" was published in Feb. 1999 in the internet (see "http//www.3gpp.org") by the 3$^{rd}$ Generation Partnership Project, which is the standardization body for the future radio communications system UMTS (Universal Mobile Telecommunications System).

According to the invention these signaling data TFCI which are encoded with a high redundancy are not only used to inform the radio receiver about parameters for decoding, like spreading factor and interleaving scheme, but also TFCI are used to compute a measure of the transmission quality, namely the bit error rate BER.

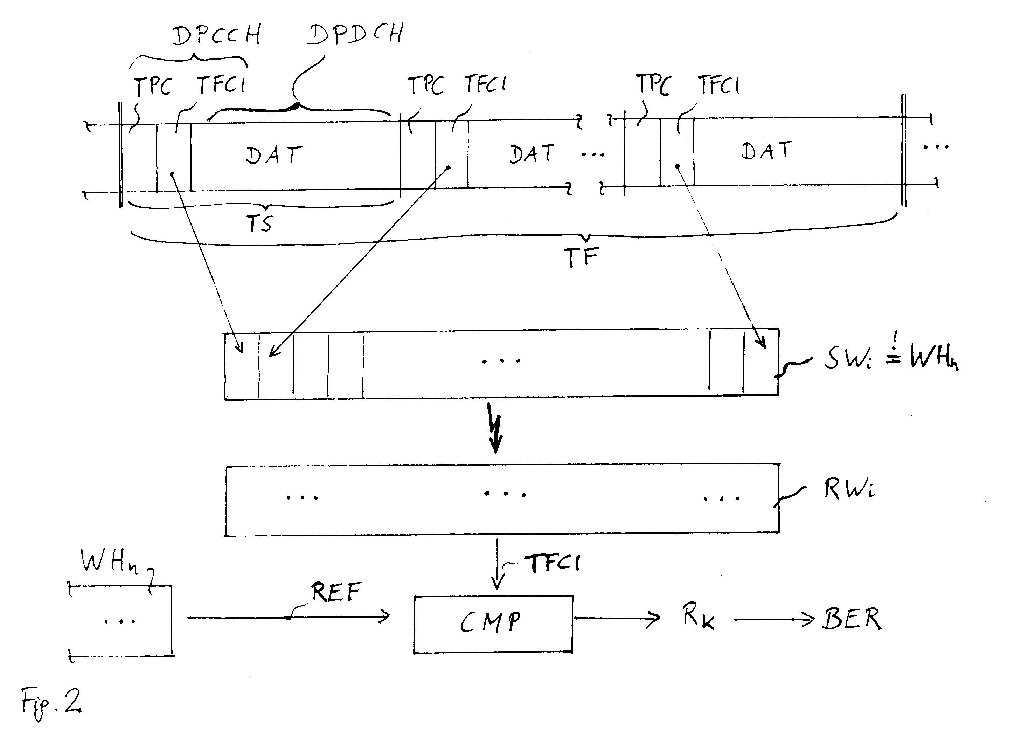

It can be seen from Fig. 2 that these signaling data TFCI and further signaling data TPC are transmitted together with useful data DAT within a TDM (time division multiplex) scheme having time frames TF. Each time frame TF is subdivided into 16 time slots TS, each time slot having two data fields for carrying signaling data TPC (1 bit) and TFCI (2 bits) and one data field for carrying useful data DAT. This means that the signaling data are divided into a first part TFCI and into a second part TPC whereas the useful data DAT are not divided into different parts. The respective two signaling data fields represent the signaling channel DPCCH which is also named "dedicated physical control channel". The single useful data field represents the radio channel DPDCH which is also named "dedicated physical data channel". The difference between the first part TFCI and the second part TPC of the signaling data is that the first part TFCI, the so-called "transport format combination indicator", is encoded with a higher redundancy than the second part TPC, the so-called "transmit power command".

The method of determining the transmission quality of the radio channel will now be described with reference to both Fig. 1 and 2:

In the first step 1 10 the first part of the signaling data TFCI from each time frame TF having 16 time slots TS are taken together to constitute a 32 bit sequence. In Fig. 2 the i-th time frame TF is shown from which the i-th sequence SWi is derived. This sequence SWi is equal to one of 32 predefined Walsh-Hadamard code words WHn and which is transmitted according to the shown transmission scheme (see Fig. 2) from the radio transmitter to the radio receiver.

In the next step 120, at the receiving end, a sequence RWi is received which is different to SWi because of radio transmission deficiencies like interference from noise or co-channel, multipath propagation, fading etc.

For determining the quality of the radio channel DPDCH this received 32 bit sequence RWi is compared with a set of 32 orthogonal block codes WHn within the next step 130. The block codes are represented by 32 different Walsh-Hadamard code words WHn, one of which is equal to the sent sequence SWi. That Walsh-Hadamard code word WHn which mostly matches to the received RWi is considered to be the reproduction of the transmitted sequence SWi.

In a next step 140 the bit error rate BER is computed by determining the number of bits from the received RWi which are different to those bits of the transmitted SWi. At the end of step 140 the bit error rate BER has been calculated for the duration of the i-th time frame TF.

In order to get a more reliable measure of the radio channel quality the step 110 to 140 are repeated frame by frame for the duration of several time frames covering a given time period, e.g. 20 sec. The average value of the calculated results represents the averaged bit error rate which can then be compared with a threshold value which represents the minimum quality level. This means that the BER must not rise up to a threshold which is, e.g. $10^{-6}$. Otherwise more transmission power will be requested at the transmitting end.

Instead of performing the described method step 130, in which the received bit sequence RWi is compared with the Walsh-Hadamard codes words being stored in a look-up table, the received sequence RWi can be correlated with n bit reference data to obtain correlation products. Then the greatest correlation product $R_K$ is used to calculate the bit error rate BER which is given as

$$BER = 1 - \frac{|Rk| + y}{2 \cdot y},$$

with $y = n \cdot ld\,(n)$ [ld: logarithm to the base two]

Fig. 2 shows schematically the transmission scheme which is used for transmitting the useful data DAT on the radio channel DPDCH and the signaling data TPC and TFCI on the signaling channel DPCCH. Fig. 2 also shows schematically the process of evaluating the one signaling data TFCI for computing the bit error rate BER. Thus Fig. 2 is a different illustration of the method steps shown in Fig. 1.

What can be seen in more detail from Fig. 2 is that from the already existing two parts TPL and TFCI that part of the signaling data TFCI which is encoded with the higher redundancy is taken to determine the transmission quality of the radio channel DPDCH. In addition to this it can be seen from Fig. 2 that this part of the signaling data TFCI is transmitted in 2 bit long data fields, one per each time slot TS. However, the evaluation of the TFCI data for determining the BER is done frame by frame. This is done by assembling the 16 TFCI data fields of each time frame TF to a 32 bit sequence SWi. At the receiving end the respective sequences RWi are then compared in a comparator CMP with reference data REF consisting of 32 different Walsh-Hadamard code words WHn. This is preferably done by using a look-up table in which the different Walsh-Hadamard code words WHn are stored. The comparison of RWi with WHn corresponds to a correlation process for calculating 32 correlation products of which the largest value $R_K$ is then taken to compute the bit error rate BER according to the equation:

$$BER = 1 - \frac{|Rk| + y}{2 \cdot y}$$

with $y = n \cdot ld(n)$ [ld: logarithm to the base two].

Thus a measure for the transmission quality is computed in a rapid and reliable manner. The above equation is used to obtain the BER in the case of hard bit coding. However, in the case of soft bit coding the following equation should be used:

$$BER = \frac{|Rk|}{\sqrt{\sum_{i \neq k} \frac{Ri^2}{i-1}}}$$

with $y = n \cdot ld(n)$ and Ri is the i-th correlation product.

In the above desribed embodiment of the invention the signaling data are divided into two parts being encoded with different degrees of redundancy, and that part having the higher degree of redundancy is taken to determine a measure of the quality of the radio channel, esp. to determine the BER. If there are signaling data being divided into more than two parts, that part being encoded with the highest redundancy would preferably be taken to determine the BER.

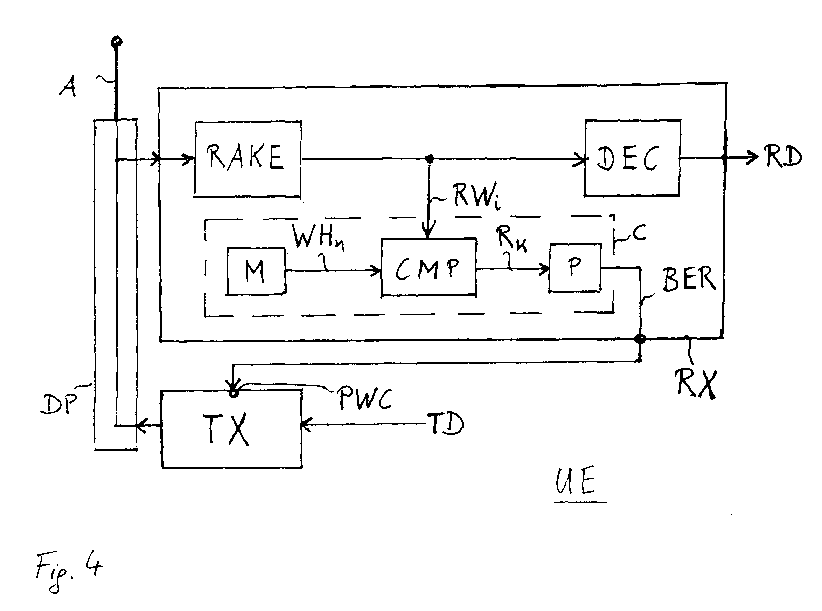

Fig. 3 shows schematically the structure of a radiocommunications system RS having at least one base station NB for providing mobile radio service to at least one mobile station UE. Both radio devices, the base station NB as well as the mobile station UE, are equipped with a radio transmitter TX and with a radio receiver RX which is constructed according to the teaching of the invention and which will be described later in more detail with reference to Fig. 4.

The system shown in Fig. 3 is a CDMA mobile radio system in which radio signals are transmitted according to the aforementioned standard UMTS. This means that the radio channels DPDCH for transmitting useful data, the so-called dedicated physical data channels, are separated from each other by using different spreading codes (channelization codes). With each radio channel DPDCH a signaling channel DPCCH, the so-called dedicated physical control channel, is associated. The transmission scheme for the uplink direction is shown in Fig. 2 and has already been described.

In Fig. 4 the block diagram of the mobile station UE is shown. The mobile station UE comprises an antenna A, a duplexer DP connected thereto, a radio transmitter TX connected to the input of the duplexer DP and a radio receiver RX connected to the output of the duplexer DP. The in put of the transmitter TX is fed with transmitting data TD, like voice, video or packet data coming from preceding stages (not shown here). The radio receiver RX is equipped with a receiving stage RAKE having the architecture of the well-known Rake receiver. The output of the receiving stage RAKE is connected with the input of a decoding stage DEC having the architecture of the well-known Viterbi decoder. The output of the decoding stage DEC provides receiving data RD to the succeeding audio stages for processing voice date, to data interfaces for processing packet data etc. (not shown here).

According to the invention the radio receiver RX is additionally equipped with a circuit C for determining the transmission quality of the radio channel by performing the described method.

Thus the circuit C evaluates the received 32 bit sequences RWi and computes a bit error rate BER by comparing frame by frame these received sequences RWi with the stored Walsh-Hadamard code words WHn.

Therefor the circuit comprises a comparator CMP, a memory M and a processor P both being connected thereto. One input of the comparator CMP is connected to the output of the memory M in which the Walsh-Hadarmard code word WHn are stored. The other input of the comparator CMP is connected to the output of the receiving stage RAKE which provides the received sequences RWi. The output of the comparator CMP provides the correlation products derived from the comparison process. From the best correlation product Rk the processor P then computes the bit error rate BER and decides whether a "power up command" PWC should be sent to the base station in order to indicate that the power level at the receiving end is too low.

**Claims**

1. A method (100) of determining the transmission quality of a radio channel (DPDCH) on which useful data (DAT) are transmitted and with which a signaling channel (DPCCH) is associated on which signaling data (TPC; TFCI) are transmitted (step 120), **characterized in** that at the transmitting end, the signaling data are divided into at least two parts (TPC; TFCI), with a first part (TFCI) being encoded (step 110) with a higher redundancy than a second part (TPC), that at the receiving end, the signaling data from the first part (TFCI) which is encoded and transmitted with the higher redundancy are compared (step 130) with reference data (REF), and that based on this comparison, a measure (BER) of the transmission quality of the radio channel (DPDCH) is computed (step 140).

2. A method (100) as claimed in claim 1, characterized in that a code formed from a number of n orthogonal block codes (WHn) is used (step 110) to encode the signaling data from said first part (TFCI) with the higher redundancy, and that said n orthogonal block codes (WHn) are used (step 130) as the reference data (REF).

3. A method (100) as claimed in claim 2, characterized in that the signaling data (TPC, TFCI) are transmitted (step 120) in frames (TF) divided into time slots (TS), and that at least the encoding using the n orthogonal block codes is performed frame by frame (step 1 10), with Walsh-Hadamard codes (WHn) being used for the block codes (steps 110 and 130).

4. A method (100) as claimed in claim 2, characterized in that the signaling data from said first part (TFCI) encoded with the higher redundancy are transmitted and received (step 120) as n-bit sequences (RWi), and that the reference data (REF) comprise n-bit reference sequences (WHn), with which the respective received bit sequence (RWi) is compared (step 130).

5. A method (100) as claimed in claim 4, characterized in that the received bit sequence (RWi) is compared with the n-bit reference sequences (WHn) by correlating the bit sequences to obtain correlation products (step 130), the greatest (Rk) of which is used (step 140) to compute a bit error rate (BER) which is the measure of the transmission quality of the radio channel (DPDCH), and which is given as

$$BER = 1 - (|Rk| + y )/2y,$$

with $y = n \cdot \mathrm{ld}(n)$.

6. A method (100) as claimed in claim 1, characterized in that the radio channel is a CDMA radio channel (DPDCH), and that the signaling data from said first part (TFCI) encoded with the higher redundancy define parameters for the decoding of the useful data (DAT) transmitted over the radio channel (DPDCH), particularly the interleaving pattern and the spreading factor to be used for the transmission on the CDMA radio channel (DPDCH).

7. A circuit (C) for a radio receiver (RX) which determines the transmission quality of a radio channel (DPDCH) with an associated signaling channel (DPCCH) on which signaling data (TPC; TFCI) are transmitted, **characterized in** that at the transmitting end, the signaling data are divided into at least two parts (TPC; TFCI), with a first part (TFCI) being encoded with a higher redundancy than a second part (TPC), that the circuit (C) comprises a memory (M) for reference data (REF) and a comparator (CMP) connected thereto which compares the signaling data from said first part (TFCI) encoded and transmitted with the higher redundancy with the stored reference data (REF), and that the circuit (C) further comprises computing means (P) which compute a measure (BER) of the transmission quality of the radio channel (DPDCH) based on this comparison.

8. A radio receiver (RX) comprising a circuit (C) which determines the transmission quality of a radio channel (DPDCH) with an associated signaling channel (DPCCH) on which signaling data (TPC; TFCI) are transmitted,
   **characterized in**
   that at the transmitting end, the signaling data are divided into at least two parts (TPC; TFCI), with a first part (TFCI) being encoded with a higher redundancy than a second part (TPC), that the circuit (C) comprises a memory (M) for reference data (REF) and a comparator (CMP) connected thereto which compares the signaling data from said first part (TFCI) encoded and transmitted with the higher redundancy with the stored reference data (REF), and that the circuit (C) further comprises computing means (P) which compute a measure (BER) of the transmission quality of the radio channel (DPDCH) based on this comparison.

9. A radio device (NB, UE) comprising a radio transmitter (TX) and a radio receiver (RX), the latter being equipped with a circuit (C) which determines the transmission quality of a radio channel (DPDCH) with an associated signaling channel (DPCCH) on which signaling data (TPC; TFCI) are transmitted,
   **characterized in**
   that the radio transmitter (TX) encodes the signaling data which are divided into at least two parts (TPC; TFCI), with a first part (TFCI) being encoded with a higher redundancy than a second part (TPC), that the circuit (C) of the radio receiver (RX) comprises a memory (M) for reference data (REF) and a comparator (CMP) connected thereto which compares the signaling data from said first part (TFCI) encoded and transmitted with the higher redundancy with the stored reference data (REF), and that the circuit (C) further comprises computing means (P) which compute a measure (BER) of the transmission quality of the radio channel (DPDCH) based on this comparison.

10. A radiocommunications system (MRS) comprising radio devices (NB, UE) each of which having a radio transmitter (TX) and a radio receiver (RX), the latter being equipped with a circuit (C) which determines the transmission quality of a radio channel (DPDCH) with an associated signaling channel (DPCCH) on which signaling data (TPC; TFCI) are transmitted,
**characterized in**
that the radio transmitter (TX) encodes the signaling data which are divided into at least two parts (TPC; TFCI), with a first part (TFCI) being encoded with a higher redundancy than a second part (TPC), that the circuit (C) of the radio receiver (RX) comprises a memory (M) for reference data (REF) and a comparator (CMP) connected thereto which compares the signaling data from said first part (TFCI) encoded and transmitted with the higher redundancy with the stored reference data (REF), and that the circuit (C) further comprises computing means (P) which compute a measure (BER) of the transmission quality of the radio channel (DPDCH) based on this comparison.

$TFC_i$

110

$SW_i$

120

$RW_i$

$REF = WH_n$

130

$R_k$

140

BER

100

Fig. 1

Fig. 2

DPDCH          DPCCH

TX | RX

NB

RX
TX

UE

MRS

Fig. 3

EP 1 067 730 A1

Fig. 4

European Patent Office

## EUROPEAN SEARCH REPORT

Application Number

EP 99 44 0178

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 798 888 A (NOKIA MOBILE PHONES LTD) 1 October 1997 (1997-10-01)<br>* page 2, line 25 - line 32 *<br>* page 3, line 2 - line 6 *<br>* page 3, line 30 - line 31 *<br>* figure 6 * | 1-4,6-10 | H04L1/20<br>H04L1/00 |
| A | | 5 | |
| X | US 5 432 778 A (MINDE TOR B  ET AL) 11 July 1995 (1995-07-11)<br>* column 3, line 34 - line 55 *<br>* column 4, line 44 - line 47 *<br>* column 6, line 43 - line 49 * | 1-4,6-10 | |
| A | | 5 | |
| A | US 5 802 105 A (TIEDEMANN JR EDWARD G  ET AL) 1 September 1998 (1998-09-01)<br>* column 2, line 18 - line 28 *<br>* column 3, line 22 - line 31 *<br>* column 4, line 56 - column 5, line 1 *<br>* column 5, line 48 - line 50 * | 1-10 | |
| | | | TECHNICAL FIELDS SEARCHED (Int.Cl.7) |
| A | EP 0 853 393 A (NIPPON TELEGRAPH & TELEPHONE) 15 July 1998 (1998-07-15)<br>* column 1, line 5 - line 8 *<br>* column 4, line 10 - line 19 * | 1-10 | H04L |

The present search report has been drawn up for all claims

| Place of search | Date of completion of the search | Examiner |
|---|---|---|
| THE HAGUE | 16 November 1999 | Orozco Roura, C |

EPO FORM 1503 03.82 (P04C01)

**ANNEX TO THE EUROPEAN SEARCH REPORT
ON EUROPEAN PATENT APPLICATION NO.**

EP 99 44 0178

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-1999

| Patent document cited in search report | | Publication date | Patent family member(s) | | Publication date |
|---|---|---|---|---|---|
| EP 0798888 | A | 01-10-1997 | GB | 2311699 A | 01-10-1997 |
| US 5432778 | A | 11-07-1995 | SE | 470372 B | 31-01-1994 |
| | | | AU | 663965 B | 26-10-1995 |
| | | | AU | 4517093 A | 24-01-1994 |
| | | | BR | 9305555 A | 08-11-1994 |
| | | | CA | 2114715 A | 06-01-1994 |
| | | | CN | 1081298 A | 26-01-1994 |
| | | | EP | 0612453 A | 31-08-1994 |
| | | | FI | 940828 A | 22-02-1994 |
| | | | JP | 6510413 T | 17-11-1994 |
| | | | MX | 9303653 A | 31-01-1994 |
| | | | NZ | 253806 A | 27-08-1996 |
| | | | SE | 9201923 A | 24-12-1993 |
| | | | WO | 9400938 A | 06-01-1994 |
| | | | SG | 43785 A | 14-11-1997 |
| US 5802105 | A | 01-09-1998 | AU | 706824 B | 24-06-1999 |
| | | | AU | 4371196 A | 19-06-1996 |
| | | | BR | 9510001 A | 13-01-1998 |
| | | | CA | 2206251 A | 06-06-1996 |
| | | | CN | 1174640 A | 25-02-1998 |
| | | | EP | 0806101 A | 12-11-1997 |
| | | | FI | 972208 A | 28-07-1997 |
| | | | JP | 10510121 T | 29-09-1998 |
| | | | WO | 9617454 A | 06-06-1996 |
| | | | ZA | 9510109 A | 06-06-1996 |
| EP 0853393 | A | 15-07-1998 | CA | 2230778 A | 31-12-1997 |
| | | | CN | 1198274 A | 04-11-1998 |
| | | | WO | 9750197 A | 31-12-1997 |

EPO FORM P0459

For more details about this annex : see Official Journal of the European Patent Office, No. 12/82